# FASCICULE DE BREVET EUROPEEN

(11) **EP 0 689 300 B1**
(45) Date de publication et mention de la délivrance du brevet: **14.08.2002**
(21) Numéro de dépôt: 95401294.4
(22) Date de dépôt: 02.06.1995
(51) Int. Cl.: H04B 3/58

(54) **Appareil pour compenser l'atténuation des signaux de télécommande centralisée sur un réseau électrique**
Einrichtung zum Kompensieren der Dämpfung zentralisierter Fernsteuerungssignale auf einem Stromnetz
Apparatus for compensation centralised remote control signal attenuation on power lines

(30) Priorité: 20.06.1994 FR 9407512
(43) Date de publication de la demande: 27.12.1995
(73) Titulaire: SCHLUMBERGER INDUSTRIES S.A., 92120 Montrouge (FR)
(72) Inventeur: Huet, Jean-Philippe, F-86000 Poitiers (FR); Gogce, Metin, F-86130 Saint Georges les Baillargeaux (FR); Tissier, Jean-François, F-86360 Chasseneuil du Poitou (FR)
(74) Mandataire: Feray, Valérie

(56) Documents cités:
- WO-A-91/16770
- WO-A-91/19360
- WO-A-93/25011
- FR-A- 901 204
- FR-A- 2 419 619

## Description

La présente invention est relative à un appareil apte à compenser l'atténuation des signaux de télécommande centralisée sur un réseau électrique due à la présence d'une charge d'impédance faible.

Suite à la dérèglementation de la production et de la distribution d'électricité, en particulier dans les pays européens, il y a eu une augmentation du nombre des appareils qui fournissent de l'électricité reliés aux réseaux électrique. En particulier les grands consommateurs d'électricité ont des appareils, telles que des installations d'autoproduction ou de cogénération, qui peuvent consommer et fournir de l'électricité au réseau. Malheureusement ces appareils présentent une impédance faible à des signaux de télécommande centralisée transmis sur le réseau électrique. Par exemple, la charge présentée par les installations d'autoproduction ou de cogénération dépend de la réactance subtransitoire de l'alternateur de l'appareil. Par conséquent les signaux de télécommande centralisée sont atténués, parfois au point où ils ne seront pas détectés par un récepteur de télécommande relié au réseau.

Dans le passé, des filtres bouchons ont été utilisés pour remédier à l'influence des charges faibles. Un de ces dispositifs, comprenant un condensateur et une inductance reliés en parallèle et ayant une impédance maximale à la fréquence des signaux de télécommande centralisée, est connecté entre le réseau et une charge faible pour bloquer le passage du courant à la fréquence de télécommande. Ces filtres passifs présentent certains inconvénients. En particulier, les filtres fonctionnent à une fréquence d'anti-résonance spécifique de la télécommande centralisée. Si le filtre est fabriqué pour contrer plusieurs fréquences à des instants différents, par exemple pour un réseau utilisant des fréquences différentes de télécommande, des phénomènes de résonance et d'anti-résonance entre des éléments du circuit filtre peuvent se présenter. Le réseau lui-même peut posséder d'autres éléments selfiques et/ou capacitifs pouvant provoquer d'autres résonances nuisibles au bon fonctionnement du circuit et du réseau. Il y a également un problème de précision de la valeur des composants du filtre. La technologie actuelle ne garantit pas qu'on peut obtenir la précision nécessaire et le vieillissement des composants conduit généralement à une dérive de leur valeur, entraînant un décalage de la fréquence anti-résonance. Ce décalage réduit l'efficacité du filtre, ce qui peut devenir dangereux si la fréquence de l'anti-résonance est mal placée.

En plus, la self du filtre présente une résistance ohmique au réseau correspondant au bobinage de la self, qui dépend du coefficient de qualité Q de la self et qui amortit le phénomène de résonance. Pour réduire la résistance de la self et accroître la performance du filtre, il faut avoir un coefficient Q très élevé, mais la technologie actuelle limite les valeurs possibles. L'installation d'un circuit de ce type entraîne également la prise en compte des contraintes électriques importantes dans le dimensionnement des éléments, et conduit parfois à une non faisabilité de cette solution.

La présente invention a pour but de fournir un appareil pouvant supprimer l'influence d'une charge d'impédance faible sans les inconvénients des filtres connus.

La présente invention est caractérisée en ce qu'elle comprend un circuit d'acquisition qui détecte les signaux de télécommande centralisée existant sur le réseau et un circuit d'injection relié au circuit d'acquisition qui injecte, sur le réseau et entre les connexions au réseau du circuit d'acquisition et de la charge faible, des signaux d'injection ayant la même fréquence que les signaux de télécommande et une amplitude et phase qui dépend de l'amplitude et phase des signaux de télécommande centralisée acquis par le circuit d'acquisition.

De préférence, le circuit d'injection injecte des signaux d'injection ayant la même phase et une amplitude égale ou inférieure à l'amplitude des signaux de télécommande centralisée acquis par le circuit d'acquisition.

Par ces moyens, l'invention fournit un type de filtre actif dans lequel les signaux injectés par le circuit d'injection servent à renforcer les signaux de télécommande centralisée circulant sur le réseau électrique. Le système fonctionne en boucle et, si les signaux injectés ont une amplitude légèrement supérieure à l'amplitude des signaux acquis (par exemple) l'amplitude du signal détecté par le circuit d'acquisition remontera à ce niveau supérieur, avec une croissance qui diminue au fur et à mesure que le signal approche de la valeur absolue du signal de télécommande.

Dans d'autres modes de réalisation, le circuit d'injection injecte des signaux d'injection ayant la même phase et une amplitude égale ou inférieure à l'amplitude des signaux de télécommande centralisée acquis par le circuit d'acquisition.

Du côté du réseau, le circuit présente une impédance qui augmente la valeur de l'impédance faible au point où les effets de la charge sont complètement masqués et le réseau ne voit plus la charge.

Les inconvénients des filtres passifs, associés avec la précision des composants utilisés, sont évités et la présente invention fournit un appareil qui supprime l'influence néfaste d'une faible impédance. Cet appareil peut être utilisé avec plusieurs fréquences de télécommande centralisée, étant donné que le circuit d'injection de l'appareil, qui peut avoir à peu près la même structure que le circuit d'injection d'un générateur des signaux de télécommande peut produire plusieurs fréquences de signaux sans les problèmes de résonance ou d'anti-résonance qui se présentent avec des filtres passifs. Les problèmes liés à la résistance ohmique d'un filtre passif sont également évités.

Dans un mode de réalisation, l'appareil comprend également un circuit de surveillance qui surveille les signaux de télécommande centralisée circulant sur le réseau électrique entre les connexions au réseau du circuit d'injection et de la charge, pour fournir un signal représentant l'efficacité du fonctionnement de l'appareil.

Dans le cas où l'appareil fonctionne bien, la charge sera masquée au réseau par l'injection des signaux du circuit d'injection et il n'y aura pas de signaux de télécommande centralisée sur les lignes de tension entre le circuit d'injection et la charge. Si le circuit de surveillance détecte des signaux à la fréquence des signaux centralisés, cela signifie qu'il y a une défaillance. Dans ce cas, un signal d'avertissement est fourni par le circuit de surveillance pour inhiber le circuit d'injection et arrêter l'appareil. La présence des signaux en aval du circuit d'injection, c'est-à-dire côté charge, signifie que l'amplitude et/ou la phase des signaux injectées sont mal choisies. Dans ce cas, les signaux à la sortie de l'appareil peuvent interférer avec les signaux de télécommande centralisée déjà existant sur le réseau.

De préférence, le circuit d'injection comprend également une horloge, le circuit d'injection étant apte à terminer l'injection d'un signal d'injection à un moment prédéterminé après le début du signal.

Dans le domaine de la télécommande centralisée, chaque système de télécommande utilise un format d'impulsions caractéristique, la trame d'impulsions et la durée des impulsions étant fixées pour chaque système. Si la durée d'une impulsion d'un système est connue l'appareil peut terminer l'injection d'un signal à un temps prédéterminé qui correspond à cette durée pour empêcher que le signal injecté soit entraîné à la fin d'une impulsion venant de la télécommande centralisée.

De préférence, l'appareil est apte à acquérir et à injecter plusieurs fréquences de télécommande centralisée, le circuit d'injection comprenant une mémoire pour mémoriser la durée de chaque impulsion correspondant à chaque fréquence de télécommande centralisée utilisée, pour que le circuit d'injection termine l'injection d'un signal à un temps correspondant à la durée de l'impulsion de télécommande ayant cette fréquence.

Dans un autre mode de réalisation, l'appareil est apte à combiner l'emploi d'une horloge et la détection d'un seuil ou ratio du signal pour assurer la fin de chaque impulsion. Ainsi dès que l'impulsion détectée diminue, et descend en dessous d'un seuil proportionnel à chaque niveau d'impulsion, les moyens de contrôle vérifient par l'horloge qu'on est bien dans une fin d'impulsion théorique pour arrêter l'injection. Dans le cas contraire on continuera à injecter. Par ce moyen, l'appareil évite d'arrêter trop tôt son action, car il peut y avoir une petite incertitude sur l'instant de démarrage exact de l'impulsion due à la détection du signal.

Dans un autre mode de réalisation, la possibilité d'utiliser les ordres provenant de la télécommande centralisée permet d'être synchrone avec les impulsions de la télécommande centralisée. Les ordres sont envoyés du poste du distributeur d'électricité, ou de la salle où se trouve la baie centrale, par lignes spéciales ou téléphoniques.

Dans un mode de réalisation, le circuit d'injection comprend un pont redresseur alternatif-continu relié au réseau électrique suivi d'un filtre permettant d'avoir une tension continue, un pont onduleur recevant la tension continue du filtre et générant les signaux d'injection et un circuit de couplage injectant les signaux d'injection sur le réseau. Le circuit de couplage peut comprendre également un filtre passif pour bloquer la composante fondamentale du réseau.

De préférence, le circuit de couplage comprend un ou plusieurs bancs de condensateurs pour accorder le circuit de couplage à la fréquence du signal injecté. Dans un mode de réalisation apte à être utilisé avec plusieurs fréquences de télécommande, plusieurs bancs de condensateurs sont fournis, la connexion des bancs de condensateurs dans le circuit de couplage étant contrôlée par un signal du circuit d'injection, dépendant de la fréquence du signal injecté.

L'invention sera mieux comprise à la lecture de la description qui suit de l'art antérieur et de plusieurs modes de réalisation de l'invention, donnée à titre d'exemples illustratifs et non-limitatifs et faisant référence aux dessins annexés sur lesquels :
La Figure 1 montre un exemple d'un filtre conventionnel utilisé pour remédier à l'influence d'une charge ayant une impédance faible;
La Figure 2 montre un exemple d'un appareil apte à compenser l'atténuation des signaux de télécommande centralisée par une charge faible selon un premier mode de réalisation de l'invention;
La Figure 3 montre un exemple d'un appareil selon un autre mode de réalisation de l'invention;
La Figure 4 montre un exemple d'un appareil selon un autre mode de réalisation de l'invention;
La Figure 5 montre la sortie d'un appareil de compensation selon la présente invention et son effet sur un signal de télécommande centralisée présent sur le réseau.

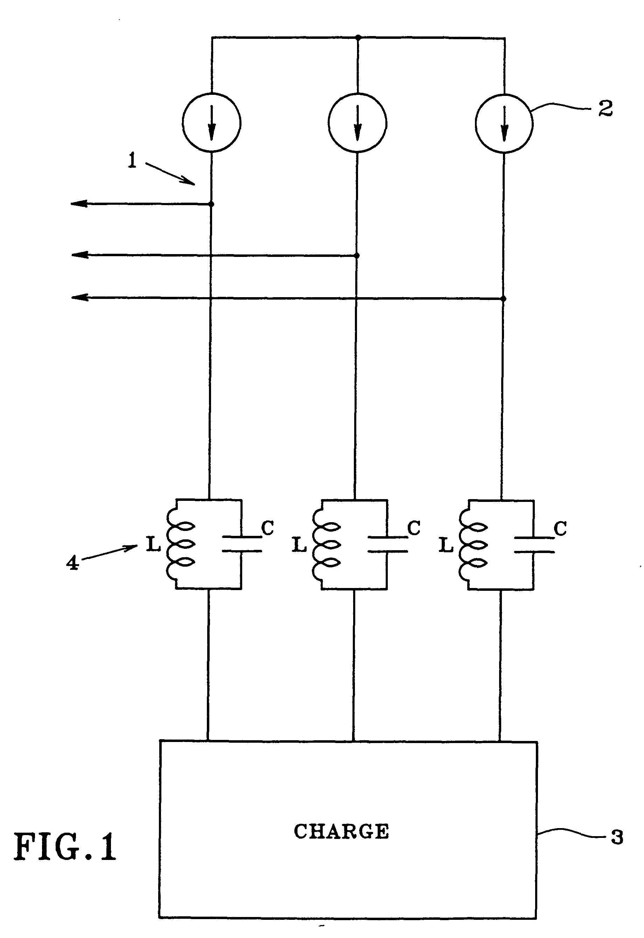

La Figure 1 montre un réseau électrique 1 et un transmetteur de signaux de télécommande centralisée 2, qui transmet des signaux de télécommande à des fréquences musicales superposées sur la fréquence fondamentale du réseau. Ces signaux sont reçus par des récepteurs relais connectés au réseau aval du transmetteur et sont utilisés pour contrôler la gestion des systèmes de chauffage etc. Comme le montre la Figure 1, une charge 3 qui a une impédance faible vis à vis des signaux de telécommande est reliée au réseau. Pour supprimer l'atténuation des signaux par la charge, des filtres passifs 4 comprenant un condensateur et une inductance en parallèle sont mis en place en amont de la charge. Les filtres passifs ont une impédance qui est maximale à la fréquence des signaux de télécommande, c'est-à-dire ils ont une anti-résonance à cette fréquence. Or, ils passent la fréquence fondamentale du réseau sans consommer trop de puissance. Les filtres passifs de ce type présentent certains inconvénients décrits ci-dessus : ils fonctionnent à une seule fréquence, l'introduction d'autres éléments pour filtrer d'autres fréquences conduit à des phénomènes de résonance, ils sont sensibles aux valeurs des composants utilisés qui peuvent changer avec le vieillissement des composants, etc.

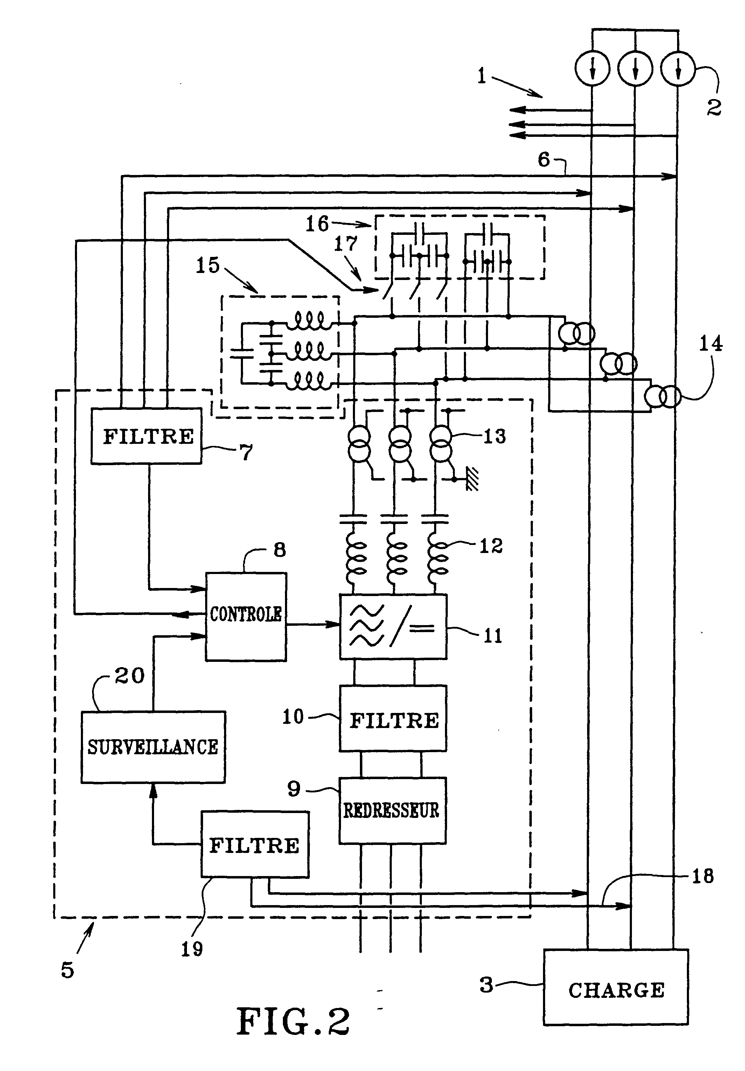

La Figure 2 montre un appareil 5 apte à compenser l'atténuation des signaux de télécommande par la charge 3 selon un mode de réalisation de l'invention et comprenant un circuit d'acquisition ayant des transformateurs de tension 6 et un circuit de filtrage 7 permettant l'acquisition des signaux de télécommande, un circuit d'injection pour injecter des signaux sur le réseau comprenant des moyens de contrôle 8, un pont redresseur alternatif-continu 9 alimenté par le réseau et suivi d'un filtrage 10 pour fournir une tension continue, et un pont onduleur 11 qui coupe la tension continue en réponse à un signal de contrôle venant des moyens de contrôle pour produire des signaux d'injection. Un circuit de couplage suit le circuit d'injection et comprend des filtres 12, des transformateurs de sortie 13 et des transformateurs de couplage 14 connectés au réseau. Le circuit de couplage comprend également un shunt 15 qui bloque la transmission de la composante fondamentale et des bancs de condensateurs 16 qui accordent le circuit de couplage avec la fréquence des signaux de télécommande. Les bancs de condensateurs limitent la puissance réactive du système et sont reliés au circuit de couplage par un ou plusieurs contacteurs 17, contrôlés par un signal des moyens de contrôle 8.

Les signaux des transformateurs de tension 6 sont filtrés par le filtre 7 pour éliminer la composante fondamentale et pour en extraire les signaux de télécommande, qui sont envoyés aux moyens de contrôle 8. Les moyens de contrôle contrôlent le pont onduleur 11 pour injecter sur le réseau des signaux d'injection ayant la même fréquence et phase que les signaux de télécommande reçus du circuit d'acquisition. Plusieurs fréquences de signaux correspondant à plusieurs fréquences de télécommande peuvent être créés et injectés par les moyens de contrôle et le pont onduleur. L'amplitude des signaux injectés sur le réseau est égale ou légèrement inférieure ou supérieure à l'amplitude des signaux de télécommande reçus du circuit d'acquisition. Les signaux injectés par l'appareil servent à renforcer les signaux de télécommande et à compenser l'atténuation des signaux due à la charge 3. Les transformateurs de tension 6 du circuit d'acquisition reçoivent des signaux y compris des signaux injectés par les des transformateurs 14 du circuit d'injection et le système fonctionne en boucle.

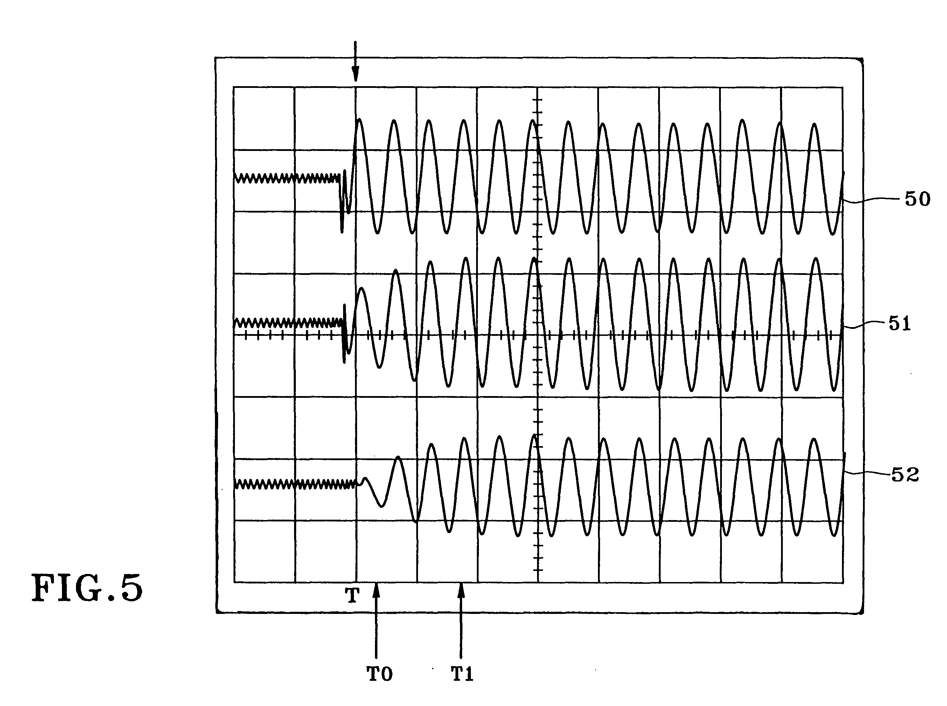

La Figure 5 montre les effets de l'appareil de la Figure 2 en masquant une charge d'une impédance faible. La première courbe 50 représente un signal de télécommande sans l'atténuation, c'est-à-dire, le signal transmis par le transmetteur des signaux de télécommande. La courbe 51 est le signal présent sur le réseau, qui sera détecté par le circuit d'acquisition, et la courbe 52 est le signal injecté par l'appareil. Au début de la transmission T0, le signal 51 est atténué, du fait de l'influence de la charge. L'appareil injecte un signal d'injection ayant la même fréquence et phase, mais avec une amplitude proportionnelle et légèrement inférieure à l'amplitude du signal détecté sur le réseau, qui remonte le signal de télécommande. L'augmentation du signal continue jusqu'au moment T1, lorsque le signal 51 a atteint l'amplitude nominale correspondant à celle obtenue sur le réseau lorsque la faible charge n'est pas connectée et le système s'équilibre. A cet instant la charge est complètement masquée par l'appareil.

Dans d'autres modes de réalisation un signal d'injection ayant une amplitude légèrement supérieure à l'amplitude du signal acquis peut être utilisé. Par exemple, l'appareil pourra injecter un signal ayant une amplitude proportionnelle à 1,1 fois l'amplitude du signal acquis par le circuit d'acquisition. Le signal de télécommande centralisée en aval de l'appareil sera ainsi légèrement augmenté en comparaison avec le signal de télécommande centralisée qui est normalement envoyé sur le réseau.

L'appareil comprend également un circuit de surveillance y compris des transformateurs de tension 18 connectés en aval des transformateurs d'injection, un filtre 19 qui extrait les signaux à la fréquence des signaux de télécommande, et un dispositif de surveillance 20. Si le système fonctionne bien il n'y aura pas de signaux de télécommande en aval des transformateurs d'injection. Or, s'il y a un problème au niveau de la synchronisation des signaux d'injection avec les signaux de télécommande, des signaux seront détectés par le circuit de surveillance. Si cette condition persiste le circuit de surveillance envoie un signal aux moyens de contrôle pour terminer l'injection, pour éviter des problèmes d'interfèrence entre les signaux injectés et les signaux de télécommande.

Pour accorder le circuit de couplage et les transformateurs 14 avec la fréquence des signaux injectés, des bancs de condensateurs 16 sont utilisés. La connexion des bancs de condensateurs dans le circuit de couplage est contrôlée par les moyens de contrôle via les contacteurs 17, pour brancher ou débrancher les bancs de condensateurs dans le circuit selon les caractéristiques et les fréquences des signaux injectés par le circuit d'injection.

Les moyens de contrôle 8 possèdent également une horloge synchrone de la composante fondamentale qui permet de limiter la durée de chaque signal injecté par le circuit. Pour chaque système de télécommande, la durée d'une impulsion de télécommande est fixée. L'identification de la fréquence du signal de télécommande par l'appareil permet d'identifier le système de télécommande utilisé. Les durées des impulsions de télécommande pour chaque système de télécommande sont stockées dans la mémoire des moyens de contrôle, et les moyens de contrôle limitent la durée des signaux injectés à la durée d'impulsion du système de télécommande qui fonctionne à cette fréquence. Par ces moyens on évite les problèmes de traîne des impulsions après que le transmetteur de télécommande centralisée a terminé son impulsion.

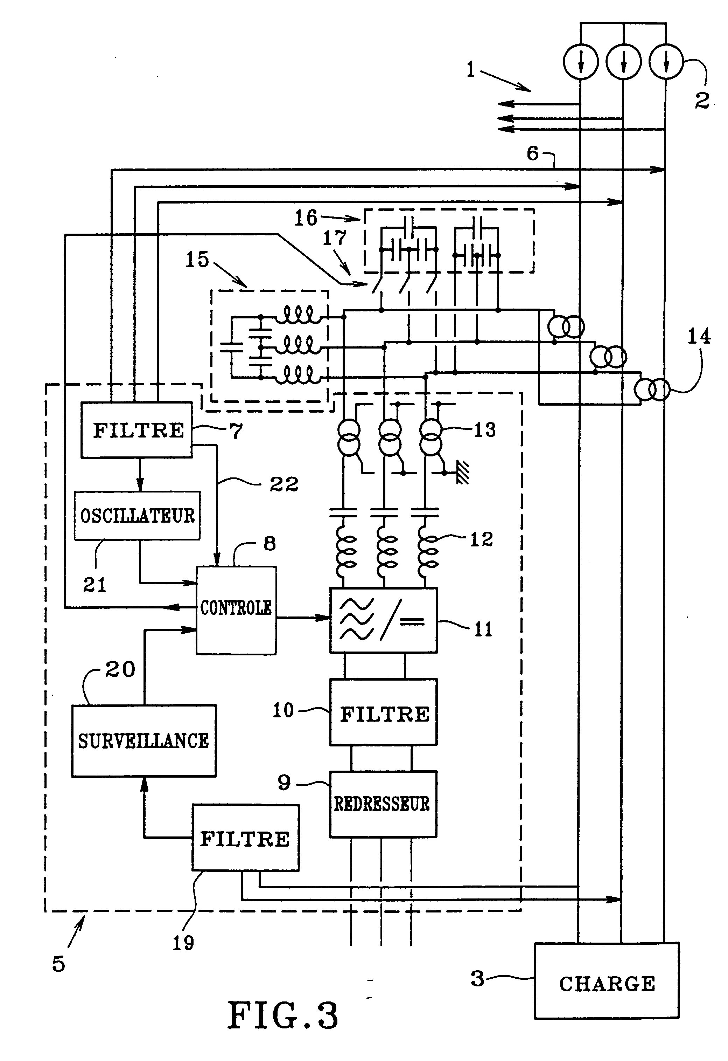

La Figure 3 montre une variante de réalisation, dans laquelle le signal filtré par le filtre 7 est décomposé en amplitude et en phase. Le signal porteur de la phase vient sélectionner et synchroniser un oscillateur, d'une carte oscillateur 21, qui correspond à la fréquence de la télécommande détectée. Le signal de l'oscillateur est envoyé aux moyens de contrôle et le pont onduleur, le signal d'amplitude 22 du filtre 7 étant appliqué aux moyens de contrôle pour fournir le bon niveau de sortie du signal injecté.

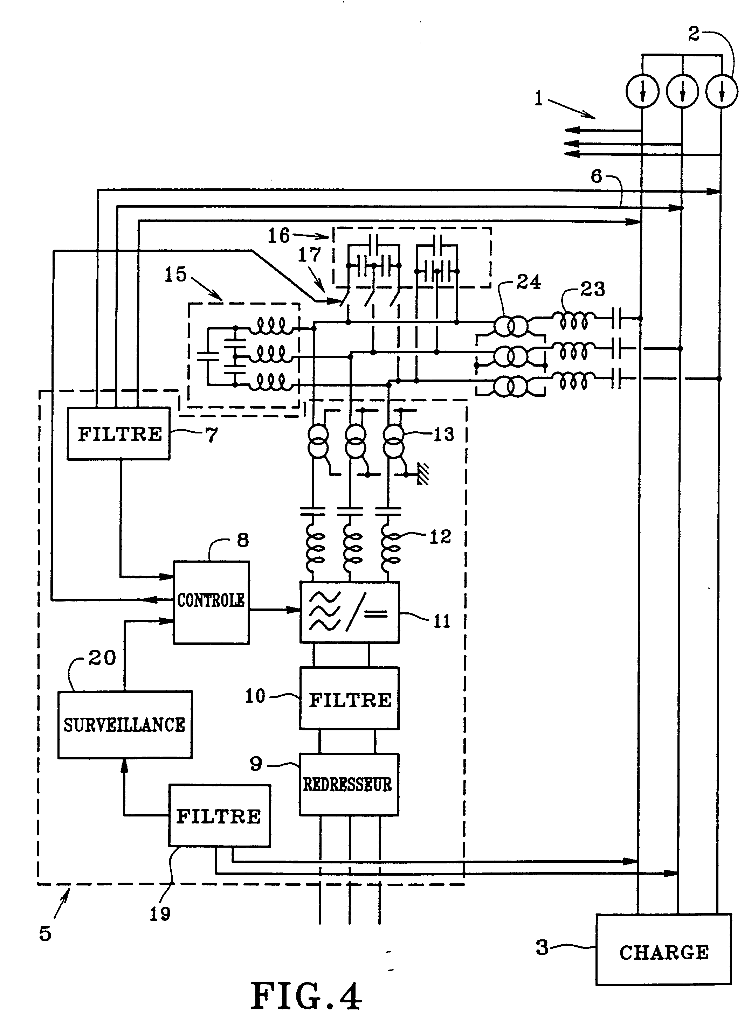

Les circuits des Figures 2 et 3 injectent des signaux en série sur le réseau. La Figure 4 montre une variante dans laquelle on se connecte au réseau en parallèle, par l'intermédiaire des circuits self-condensateurs 23 accordés aux valeurs des signaux de télécommande et mis en série avec les transformateurs d'injection 24. Comme précédemment, plusieurs bancs de condensateurs sont mis en place pour accorder le circuit de couplage plus précisément avec la fréquence de telécommande qui est injectée.

D'autres variantes sont possibles. Par exemple, pour un appareil relié en série, on peut utiliser un transformateur d'injection à entrefer, qui présente une self de faible impédance limitant la chute de tension de la composante fondamentale du réseau. Dans ce cas, le shunt 15 est superflu et on peut se contenter, au niveau d'un banc de condensateurs, de régler sa valeur définitivement à une valeur d'accord intermédiaire à celles des fréquences de télécommande utilisées. On supprime ainsi des contacteurs 17.

## Revendications

1. Appareil apte à compenser l'atténuation des signaux de telécommande centralisée sur un réseau électrique (1) due la présence d'une charge d'impédance faible (3), **caractérisé en ce qu'**il comprend un circuit d'acquisition (6,7) prévu pour détecter les signaux de télécommande centralisée existant sur le réseau et un circuit d'injection (8 - 17) relié au circuit d'acquisition et destiné à injecter sur le réseau et entre les connexions au réseau du circuit d'acquisition (6) et de la charge d'impédance faible (3), des signaux d'injection ayant la même fréquence que les signaux de télécommande et une amplitude et une phase qui dépend de l'amplitude et de la phase des signaux de télécommande centralisée acquis par le circuit d'acquisition.

2. Appareil selon la revendication 1, dans lequel le circuit d'injection (8 - 17) injecte des signaux d'injection ayant la même phase que la phase des signaux de télécommande centralisée acquis par le circuit et ayant une amplitude qui est proportionnelle à l'amplitude des signaux de télécommande centralisée acquis par le circuit d'acquisition.

3. Appareil selon la revendication 1 ou 2, dans lequel le circuit d'injection (8 - 17) injecte des signaux d'injection ayant la même phase et une amplitude supérieure à l'amplitude des signaux de télécommande centralisée acquis par le circuit d'acquisition.

4. Appareil selon la revendication 1 ou 2, dans lequel le circuit d'injection (8 - 17) injecte des signaux d'injection ayant la même phase et une amplitude égale ou inférieure à l'amplitude des signaux de télécommande centralisée acquis par le circuit d'acquisition.

5. Appareil selon l'une quelconque des revendications 1 à 4 comprenant un circuit de surveillance (18 - 20) qui surveille les signaux de télécommande centralisée circulant sur le réseau électrique entre les connexions au réseau du circuit d'injection (14) et de la charge (3), pour fournir un signal représentant l'efficacité du fonctionnement de l'appareil.

6. Appareil selon l'une quelconque des revendications 1 à 5, dans lequel le circuit d'injection (8 - 17) comprend également une horloge, le circuit d'injection étant apte à terminer l'injection d'un signal d'injection à un moment prédéterminé après le début du signal.

7. Appareil selon la revendication 6, le circuit d'injection (8 - 17) comprenant une mémoire pour mémoriser la durée de chaque impulsion correspondant à chaque fréquence de télécommande centralisée utilisée, pour que le circuit d'injection termine l'injection d'un signal à un temps correspondant à la durée de l'impulsion de télécommande ayant cette fréquence.

8. Appareil selon l'une quelconque des revendications 1 à 7, dans lequel le circuit d'injection (8 - 17) comprend un pont redresseur alternatif-continu (9) relié au réseau électrique suivi d'un filtre (10) permettant d'avoir une tension continue, un pont onduleur (11) recevant la tension continue du filtre et générant les signaux d'injection et un circuit de couplage (12 - 17) injectant les signaux d'injection sur le réseau.

9. Appareil selon l'une quelconque des revendications 1 à 8, ayant un circuit de couplage (12 - 17) comprenant un filtre passif série (15) accordé à la fréquence de la composante fondamentale du réseau.

10. Appareil selon l'une quelconque des revendications 1 à 9, ayant un circuit de couplage (12 - 17) comprenant un ou plusieurs bancs de condensateurs (16) pour accorder le circuit de couplage à la fréquence du signal étant injecté.

11. Appareil selon la revendication 10 comprenant plusieurs bancs de condensateurs (16), la connexion des bancs de condensateurs dans le circuit de couplage étant contrôlée par un signal du circuit d'injection, dépendant de la fréquence du signal injecté.

## Claims

1. Device capable of compensating for the attenuation of centralised remote control signals in an electrical network, (1) due to the presence of a low impedance load (3), **characterised by** an acquisition circuit (6,7) used to detect the centralised remote control signals present in the network and an injection circuit (8,17) connected to the acquisition circuit and used to inject into the network and between the connections to the network of the acquisition circuit (6) and the low impedance load (3), injection signals of the same frequency as the remote control signals and of an amplitude and phase which are proportional to the amplitude and phase of the centralised remote control signals acquired by the acquisition circuit.

2. Device according to the claim 1, in which the injection circuit (8-17) injects those injection signals having the same phase value as the centralised remote control signals acquired by the circuit and having an amplitude which is proportional to the amplitude of the centralised remote control signals acquired by the acquisition circuit.

3. Device according to the claim 1 or 2, in which the injection circuit (8-17) injects those injection signals having the same phase and a higher amplitude than the amplitude of the centralised remote control signals acquired by the acquisition circuit.

4. Device according to claim 1 or 2, in which the injection circuit (8-17) injects those injection signals having the same phase and an amplitude equal to or less than the amplitude of the centralised remote control signals acquired by the acquisition circuit.

5. Device according to one of the particular claims 1 to 4 comprising a monitoring circuit (18-20) which monitors the centralised remote control signals flowing in the electrical network between the connections to the injection circuit network (14) and the load (3), to provide a signal which is representative of the quality of operation of the device.

6. Device according to one of the particular claims 1 to 5, in which the injection circuit (8-17) also comprises a clock, the injection circuit being able to terminate the injection of an injection signal at a predetermined point in time after initiation of the signal.

7. Device according to the claim 6, the injection circuit (8-17) comprising a memory to store the duration of each impulse that corresponds to each centralised remote control frequency, such that the injection circuit terminates the injected signal at a point in time corresponding to the duration of the remote control impulse with the same frequency.

8. Device according to one of the particular claims 1 to 7, in which the injection circuit (8-17) comprises an ac-dc rectifier bridge (9) connected to the electrical network followed by a filter (10) which allows a dc voltage, an inverter bridge (11) at the output from the direct voltage, an inverter bridge (11) at the output from the direct voltage filter and producing the injection signals and a coupling circuit (12-17) which injects the 'injection signals' into the network.

9. Device according to one of the particular claims 1 to 8, having a coupling circuit (12-17) comprising a series passive filter (15) tuned to the fundamental frequency of the network.

10. Device according to one of the particular claims 1 to 9, having a coupling circuit (12-17) comprising one or several banks of capacitors (16) in order to match the coupling circuit to the frequency of the injected signal.

11. Device according to the claim 10 comprising several banks of capacitors (16), the connection of the banks of capacitors in the coupling circuit being controlled by an injection circuit signal which is proportional to the frequency of the injected signal.

## Patentansprüche

1. Gerät zum Ausgleich der Dämpfung von Signalen der zentralen Laststeuerung in einem Stromversorgungsnetz (1) bedingt durch eine niederohmige Last (3). Das Merkmal dieses Gerätes besteht darin, dass es aus einem Erfassungsstromkreis besteht, der zum Aufspüren von Signalen der zentralen Laststeuerung (6, 7), die im Stromnetz auftreten, dient und einem Einspeisungsstromkreis (8-17), der mit dem Erfassungsstromkreis verbunden ist und der dafür bestimmt ist, in das Stromnetz und zwischen die Netzanschlüsse des Erfassungsstromkreises (6) und der niederohmigen Last (3), Signale einzuspeisen, die die gleiche Frequenz haben, wie die Signale der zentralen Laststeuerung und eine Amplitude sowie eine Phase, die von der Amplitude und der Phase der Signale der zentralen Laststeuerung, die der Erfassungsstromkreis liefert, abhängen.

2. Gerät gemäß dem Patentanspruch 1, in dem der Einspeisungsstromkreis (8-17) Signale einspeist, die die gleiche Phase haben, wie die Signale der zentralen Laststeuerung, die der Erfassungsstromkreis liefert. Die Amplitude der eingespeisten Signale ist proportional zur Amplitude der Signale der zentralen Laststeuerung, die der Erfassungsstromkreis liefert.

3. Gerät gemäß dem Patentanspruch 1 oder 2 in dem der Einspeisungsstromkreis (8-17) Signale einspeist, die die gleiche Phase wie die Signale der zentralen Laststeuerung haben. Die Amplitude der eingespeisten Signale ist größer als die der Signale der zentralen Laststeuerung, die der Erfassungsstromkreis liefert.

4. Gerät gemäß dem Patentanspruch 1 oder 2 in dem der Einspeisungsstromkreis (8-17) Signale einspeist, die die gleiche Phase wie die Signale der zentralen Laststeuerung haben. Die Amplitude der eingespeisten Signale ist kleiner oder entspricht der Amplitude der Signale der zentralen Laststeuerung, die der Erfassungsstromkreis liefert.

5. Gerät gemäß einem der beliebig wählbaren Patentansprüche 1 bis 4. Es umfasst einen Überwachungskreis (18-20), der die Signale der zentralen Laststeuerung überwacht, die im Stromversorgungsnetz zwischen den Netzanschlüssen des Einspeisungsstromkreises (14) und der Last (3) hin- und hergehen, um ein Signal zu liefern, das den ordnungsgemäßen Betrieb des Gerätes anzeigt.

6. Gerät gemäß einem der beliebig wählbaren Patentansprüche 1 bis 5 bei dem der Einspeisungsstromkreis (8-17) außerdem eine Uhr umfasst. Der Einspeisungsstromkreis kann die Einspeisung eines Signals zum vorher festgelegten Zeitpunkt beenden, nachdem das Signal begonnen hat.

7. Gerät gemäß dem Patentanspruch 6. Der Speicher in dem die Dauer jedes Impulses gespeichert werden kann. Die Impulsdauer entspricht der gewählten Frequenz der zentralen Laststeuerung damit der Einspeisungsstromkreis (8-17) die Einspeisung eines Signals zu dem Zeitpunkt beendet, der der Impulsdauer der zentralen Laststeuerung mit dieser Frequenz entspricht.

8. Gerät gemäß einem der beliebig wählbaren Patentansprüche 1 bis 7 bei dem der Einspeisungsstromkreis (8-17) eine Gleichrichterbrücke für Wechselstrom und Gleichstrom (9) umfasst, die mit dem Stromversorgungsnetz verbunden ist. Hinter die Gleichrichterbrücke ist ein Filter (10) geschaltet, der den Betrieb einer Gleichspannung ermöglicht. Eine Wechselrichterbrücke (11) nimmt die Gleichspannung des Filters auf und erzeugt die Einspeisungssignale. Ein Koppelkreis (12-17) speist die Signale in das Netz ein.

9. Gerät gemäß einem der beliebig wählbaren Patentansprüche 1 bis 8. Es umfasst einen Koppelkreis (12-17) mit einem passiv in Reihe geschalteten Filter (15), der an die Frequenz des Hauptbauteils des Stromnetzes angepasst ist.

10. Gerät gemäß einem der beliebig wählbaren Patentansprüche 1 bis 9. Es umfasst einen Koppelkreis (12-17) mit einer oder mehreren Kondensatorbatterien (16) zur Abstimmung des Koppelkreises auf die Frequenz des eingespeisten Signals.

11. Gerät gemäß dem Patentanspruch 10 mit mehreren Kondensatorbatterien (16). Der Anschluss der Kondensatorbatterien im Koppelkreis wird vom einem Signal des Einspeisungsstromkreises überwacht und ist von der Frequenz des eingespeisten Signals abhängig.
